# EUROPEAN PATENT SPECIFICATION

(11) **EP 2 957 112 B1**
(45) Date of publication and mention of the grant of the patent: **05.06.2019**
(21) Application number: 13704779.1
(22) Date of filing: 15.02.2013
(51) Int. Cl.: H04W 8/00

(54) **MASSIVE DISCOVERY IN COMMUNICATIONS**
MASSIVE ENTDECKUNG IN KOMMUNIKATIONEN
DÉCOUVERTE MASSIVE DANS LES COMMUNICATIONS

(43) Date of publication of application: 23.12.2015
(73) Proprietor: Nokia Solutions and Networks Oy, 02610 Espoo (FI)
(72) Inventor: VAN PHAN, Vinh, FI-90100 Oulu (FI); YU, Ling, FI-90650 Oulu (FI); HORNEMAN, Kari Veikko, FI-90800 Oulu (FI)
(74) Representative: Nokia EPO representatives
(86) International application number: PCT/EP2013/053051
(87) International publication number: WO 2014/124678

(56) References cited:
- WO-A2-2013/012222
- US-A1- 2012 265 818

## Description

### FIELD OF THE INVENTION

The exemplary and non-limiting embodiments of this invention relate generally to wireless communications networks, and more particularly to discovering a plurality of devices in proximity.

### BACKGROUND ART

The following description of background art may include insights, discoveries, understandings or disclosures, or associations together with dis-closures not known to the relevant art prior to the present invention but provided by the invention. Some such contributions of the invention may be specifically pointed out below, whereas other such contributions of the invention will be apparent from their context.

Direct communication between user equipments in LTE-advanced cellular networks may also be referred to as device-to-device (D2D) communication. Device-to-device communication reuses cellular resources within a cell to increase efficiency of the cellular communication system. A network operator may control the communication process to provide better user experience and make profit accordingly.

United States patent application publication number US 2012/265818 relates to method for performing beacon broadcasting in a device-to-device communication network. The method includes selecting, by a node capable of entering a device-to-device communication network, a channel for broadcasting wherein the selection is based on at least one of the following: the characteristics of the node and the state of the node; and causing a broadcast of information related to at least part of the properties of the node on the selected channel.

### SUMMARY

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

Various aspects of the invention comprise methods, apparatuses, a computer program product, and a computer-readable storage medium as defined in the independent claims. Further embodiments of the invention are disclosed in the dependent claims.

An aspect of the invention relates to a method for discovering devices in a communications system, the method comprising selecting, in a first apparatus, one or more user terminals to be a first D2D capable device; transmitting configuration signalling from the first apparatus to the selected first device to initiate a massive discovery of D2D capable devices in the proximity of the devices; transmit, from the first apparatus to user terminals located in a specific area, a notification on the initiated massive discovery of the D2D capable devices; receive, in the first apparatus from a measuring device, a massive discovery report, the report being based on predefined parameters and measurements carried out in the measuring device.

A further aspect of the invention relates to a method for discovering devices in a communications system, the method comprising receiving configuration signalling in a second apparatus from a network apparatus, the signalling indicating that the second apparatus is selected by the network apparatus to be a first D2D capable device to initiate a massive discovery of D2D capable devices in the proximity of the devices, wherein the method comprises transmitting, in response to the received signalling, a first designated reference signal from the second apparatus to one or more subsequent devices; and/or measuring, in the second apparatus in response to the received signalling, massive discovery results and reporting the measured massive discovery results to the network apparatus, the report being based on predefined parameters and measurements carried out in the second apparatus.

A still further aspect of the invention relates to a method for discovering devices in a communications system, the method comprising receiving, in a third apparatus from a network apparatus, a notification on an initiated massive discovery of D2D capable devices, the notification being transmitted by the network apparatus to user terminals located in a specific area; receiving, in the third apparatus from a sending device, a first reference signal related to the massive discovery; wherein the method comprises in response to the received first reference signal, transmitting, from the third apparatus to a next-hop subsequent device, the first reference signal or a second reference signal being related to the massive discovery; and/or measuring in the third apparatus massive discovery results, and reporting the measured massive discovery results to the network apparatus, the report being based on predefined parameters and measurements carried out in the third apparatus.

A still further aspect of the invention relates to a method for discovering devices in a communications system, the method comprising receiving, in a fourth apparatus from a network apparatus, a notification on an initiated massive discovery of D2D capable devices, the notification being transmitted by the network apparatus to user terminals located in a specific area; receiving, in the fourth apparatus from a first-hop or further-hop subsequent device, a first or further reference signal related to the massive discovery; wherein the method comprises in response to the received reference signal, transmitting from the fourth apparatus to a next-hop subsequent device, the received reference signal or a further reference signal related to the massive discovery; and/or measuring in the fourth apparatus massive discovery results, and reporting the measured massive discovery results to the network apparatus, the report being based on predefined parameters and measurements carried out in the fourth apparatus.

A still further aspect of the invention relates to a first apparatus comprising at least one processor; and at least one memory including a computer program code, wherein the at least one memory and the computer program code are configured to, with the at least one processor, cause the first apparatus to select one or more user terminals to be a first D2D capable device; transmit configuration signalling to the selected first device to initiate a massive discovery of D2D capable devices in the proximity of the devices; transmit, to user terminals located in a specific area, a notification on the initiated massive discovery of the D2D capable devices; receive, from a measuring device, a massive discovery report, the report being based on predefined parameters and measurements carried out in the measuring device.

A still further aspect of the invention relates to a second apparatus comprising at least one processor; and at least one memory including a computer program code, wherein the at least one memory and the computer program code are configured to, with the at least one processor, cause the second apparatus to receive configuration signalling from a network apparatus, the signalling indicating that the second apparatus is selected by the network apparatus to be a first D2D capable device to initiate a massive discovery of D2D capable devices in the proximity of the devices, wherein the at least one memory and the computer program code are configured to, with the at least one processor, cause the second apparatus to transmit, in response to the received signalling, a first designated reference signal to one or more subsequent devices; and/or measure, in response to the received signalling, massive discovery results, wherein the at least one memory and the computer program code are configured to, with the at least one processor, cause the second apparatus to report the measured massive discovery results to the network apparatus, the report being based on predefined parameters and measurements carried out in the second apparatus.

A still further aspect of the invention relates to a third apparatus comprising at least one processor; and at least one memory including a computer program code, wherein the at least one memory and the computer program code are configured to, with the at least one processor, cause the third apparatus to receive, from a network apparatus, a notification on an initiated massive discovery of D2D capable devices, the notification being transmitted by the network apparatus to user terminals located in a specific area; receive, from a sending device, a first reference signal related to the massive discovery; wherein the at least one memory and the computer program code are configured to, with the at least one processor, cause the third apparatus to in response to the received first reference signal, transmit, to a second-hop subsequent device, the first reference signal or a second reference signal related to the massive discovery; and/or measure massive discovery results, wherein the at least one memory and the computer program code are configured to, with the at least one processor, cause the third apparatus to report the measured massive discovery results to the network apparatus, the report being based on predefined parameters and measurements carried out in the third apparatus.

A still further aspect of the invention relates to a fourth apparatus comprising at least one processor; and at least one memory including a computer program code, wherein the at least one memory and the computer program code are configured to, with the at least one processor, cause the fourth apparatus to receive, from a network apparatus, a notification on an initiated massive discovery of D2D capable devices, the notification being transmitted by the network apparatus to user terminals located in a specific area; receive, from a first-hop or further-hop subsequent device, a first or further reference signal related to the massive discovery; wherein the at least one memory and the computer program code are configured to, with the at least one processor, cause the fourth apparatus to in response to the received reference signal, transmit to a next-hop subsequent device, the received reference signal or a further reference signal related to the massive discovery; and/or measure massive discovery results, wherein the at least one memory and the computer program code are configured to, with the at least one processor, cause the fourth apparatus to report the measured massive discovery results to the network apparatus, the report being based on predefined parameters and measurements carried out in the fourth apparatus.

A still further aspect of the invention relates to a computer program product comprising program code means configured to perform any of the method steps when the program is run on a computer.

A still further aspect of the invention relates to a a computer-readable storage medium comprising program code means configured to perform any of the method steps when executed on a computer.

Although the various aspects, embodiments and features of the invention are recited independently, it should be appreciated that all combinations of the various aspects, embodiments and features of the invention are possible and within the scope of the present invention as claimed.

### BRIEF DESCRIPTION OF THE DRAWINGS

In the following the invention will be described in greater detail by means of exemplary embodiments with reference to the attached drawings, in which
Figure 1 illustrates a massive discovery scheme according to an exemplary embodiment of the invention;
Figure 2 shows a simplified block diagram illustrating exemplary system architecture;
Figure 3 shows a simplified block diagram illustrating exemplary apparatuses;
Figure 4 shows a messaging diagram illustrating an exemplary messaging event according to an embodiment of the invention;
Figure 5 shows a schematic diagram of a flow chart according to an exemplary embodiment of the invention;
Figure 6 shows a schematic diagram of a flow chart according to an exemplary embodiment of the invention;
Figure 7 shows a schematic diagram of a flow chart according to an exemplary embodiment of the invention.

### DETAILED DESCRIPTION OF SOME EMBODIMENTS

An exemplary embodiment is applicable to 3GPP LTE-A Rel-12 and beyond, addressing LTE-A supports for network-controlled D2D discovery and communication. 3GPP services and requirements for D2D communications may be referred to as proximity services (ProSe).

Looking towards the future liquid-radio networking paradigm of bringing smart SON (self-organized network) based radio access, local connectivity, proximity services (ProSe), even public safety and so forth to where the crowd of users are. A serving network is to discover where potential crowds or clusters of users are in a real-time fashion, referred to as quick massive discovery. This may be applied for the targeted ProSe contexts section carried out in 3GPP SA1 working group. For example, public-warning, advertising or media displaying screens, local access points, local media and communication agents, and so forth may be reactivated, if there are enough user crowds nearby (audience monitoring driven services). Furthermore, in some public safety or military applications, locating mission-critical group or crowd time to time may be of importance.

In an existing solution for D2D based massive discovery "all relevant UEs (e.g. who fulfil pre-configured conditions and/or would like to enjoy certain service and/or are in certain local area) may transmit the same beacon/reference signal in a synchronized way, so that the detection device is able to detect the amount of devices in proximity based on the received beacon/reference signal strength". The detection device is selected by the network which needs to discover the amount or density of devices in proximity but not each individual one. Another existing solution facilitates support of direct D2D communication for UEs of different operators in overlapping cellular coverage.

In an exemplary embodiment, an on-the-fly network controlled cooperative discovery of local density of D2D capable devices is proposed which compared to that proposed in the existing solution may be more complex yet more extended and controlled as well as more flexible and efficient. The exemplary scheme is based upon closer cooperation between relevant D2D capable devices for sending and measuring designated reference signals in facilitating massive discovery with possible multi-hop extension to support such a measurement over the local service area of interest which is larger than a preconfigured D2D range (constrained by preconfigured transmit power). Furthermore, as D2D discovery and communication of user devices may be supported regardless of belonging home operators, coordination between multiple operators over the service area of interest in supporting such a D2D based massive discovery is also addressed.

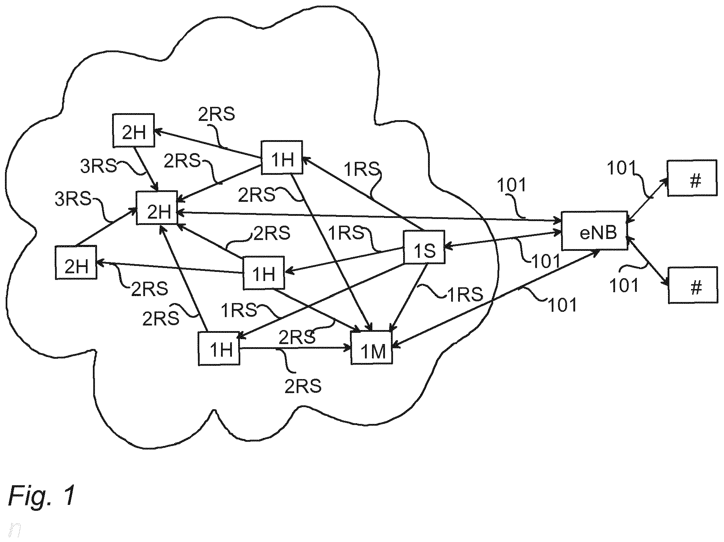

An exemplary embodiment discloses an on-the-fly network controlled cooperative discovery of local density of D2D capable devices (see also Figure 1). In Figure 1, 1S illustrates a 1^{st} sending device, 1M illustrates a 1^{st} measuring device, 1H illustrates a 1^{st}-hop subsequent device, 2H illustrates a 2^{nd}-hop subsequent device, eNB illustrates an enhanced node-B, # illustrates a device irrelevant to an on-going massive discovery, 1RS illustrates a first reference signal transmission, 2RS illustrates a second reference signal transmission, 3RS illustrates a third reference signal transmission, and 101 illustrates a conventional LTE-A radio link between eNB and a user device. No dedicated radio link between the D2D devices needs to be established for massive discovery purposes. The sending device 1S broadcasts/transmits the reference signal in pre-configured time&frequency resources. The rest of D2D devices try to listen and may be defined as 2^{nd}-hop device if it is able to receive the first hop RS. A 3^{rd}-hop subsequent device 3H (not shown in Fig. 1) may comprise an additional device receiving 3RS from one of the two 2H devices (e.g. the most left one) and being located outside the cloud boundary. An exemplary embodiment includes following proposals.

Network side:
1. The network (e.g. eNB) on the need basis, periodically, or in event-triggered fashion, selects and configures one or more first D2D capable devices (using dedicated control signalling) for initiating a massive discovery of D2D capable devices in the proximity of at least one of the selected first devices (to measure density of D2D capable devices over that local proximity area of interest).
   a) The at least one of the selected first devices is configured to send a first designated RS for a certain period of time, referred to as the first sending device 1S. b) Then, one of other first devices, in case the network selected more than one first device, may be configured either to send a first designated RS for a certain period of time as the first sending device 1S, or to listen/measure and report massive discovery results to the network in a certain future time slot or sub-frame, referred to as the first measuring device 1M. The first measuring device is to be in D2D range of at least one of the other first sending device(s). c) The first sending device may also be configured to stop sending the first RS after the certain time period and switch to be a first measuring device: to listen/measure and report massive discovery results to the network in a certain future time slot or sub-frame. d) The rest of the relevant D2D devices in the local area of interest are considered as designated subsequent (second or third, for example) listening/sending/measuring devices 1H, 2H, the proposed operation of which is detailed below in the device side.
2. The network (e.g. eNB) upon initiating the aforementioned massive discovery, notifies each UE of, at least those which are residing in the local area of interest (using common control signalling and, optionally, dedicated control signalling with those UEs which are in active state), the initiated massive discovery going on: its expected life-time of the massive discovery process and any designated portions or subsequent time periods thereof; first and any subsequent reference signals which correspond to possible subsequent flooding multi-hop extensions and time periods (as detailed below); transmission power levels and related offsets for transmitting first RS and subsequent RS thereof; triggering conditions for subsequent listening/sending/measuring devices (as detailed below); listening/sending/measuring rules and parameters; and so forth. These configuration parameters may be, at least in part, designated as hard-coded or pre-configured semi-static parameters. The latter may include either cell specific or D2D registration area specific parameters. In the D2D registration area specific option, the configuration parameters may be configured and updated to individual UEs upon initial D2D registration and/or registration update, as individual UE may be moving from one D2D registration area to another (similar to the regular mobile location update). Thus, in the hard-coded or D2D registration area specific options presented above, it may not be needed for eNB to indicate all those configuration parameters while notifying the on-going massive discovery, e.g. by broadcasting a massive discovery activation notification flag of 1 or few bits and therefore reducing common control overhead (note that the few-bits option is aimed for more flexible operation, e.g., also indicating about whether having possible subsequent extensions of massive-discovery range or time period or not). In the cell specific option, those configuration parameters may be updated and broadcasted repeatedly in certain system information block (SIB) designated for D2D capable UEs.
3. In supporting multi-operator D2D, each involved network over the local area of interest is coordinated to notify its UEs about the initiated massive discovery in a synchronized fashion (via e.g. a common D2D registration area control server). The aforementioned configuration parameters along with the massive discovery activation notification may be set to be common between different UEs regardless of belonging operators. Furthermore, D2D massive discovery reports from non-selected subsequent UEs of different involved networks (as detailed below) may be forwarded to the initiating network with assistance of e.g. the common D2D registration area control server. The overall D2D massive discovery result may also be shared among the networks involved.

Device side:
1. The main functionality and operation of the first sending 1S and first measuring devices 1M are described above. The first sending/measuring devices are supposed to be active users (in connected state of the serving cell).
2. The main functionality and operation of subsequent listening/sending/measuring devices 1H, 2H (referred to as subsequent xxx devices for short) are proposed as follows. The subsequent xxx devices are configured such that upon receiving the notification about the on-going massive discovery from the network, an individual device first listens to receive the pre-configured first reference signal 1RS and any subsequent reference signal 2RS, 3RS thereof and then decides for itself, whether it is relevant to the on-going massive recovery or not, and then how it is supposed to act: deactivate the subsequent xxx device functionality, if irrelevant, or otherwise switch to send or measure and report for the on-going massive discovery.
   a) In case an individual subsequent device does not receive any of the pre-configured RS for the pre-configured listening time period, this device may consider itself as irrelevant to the on-going massive discovery. This device may then deactivate the subsequent xxx device functionality and gets back to normal operation. b) In case a subsequent device receives the first RS (from at least one selected first device) or subsequent instances of pre-configured RS during the pre-configured listening time period, the subsequent device considers itself as a direct first-hop or an extended-hop (second, third or last hop) subsequent device and may switch to send a next corresponding subsequent RS (specific to the first-hop devices or specific to extended-hop devices: same as one of the received RS or a next RS) for a certain pre-configured time period or, by default, until the end of the massive discovery process according to specified rules and parameters, such as transmission power, repeating factor, or interval. c) A subsequent device, upon receiving any instances of pre-configured RS during the pre-configured listening time period may be configured to reconfigure itself based on the listening results coupled with the pre-configured triggering conditions, listening/sending/measuring rules and parameters by the network, to measure and report for the on-going massive discovery. For example, if the subsequent device only receives the second RS and estimates that the received second RS is from some N first-hop devices (based on the total received signal strength on the second RS) then depending on whether further extended hop is configured or not for the on-going massive discovery (as indicated in the aforementioned network notification) and/or whether N is under/above a preconfigured threshold or not, the device may decide whether to send the same second RS or a third RS or measure and report N to the serving network. In another example, the subsequent device, after sending a corresponding subsequent RS for a certain time period, may stop sending the reference signal RS and switch to operating as a measuring device with a certain preconfigured probability. In this example, the subsequent device may be configured to measure either a certain hop's RS (e.g. 3^{rd} hop), or RS of each possible hop (e.g. 1^{st}, 2^{nd}, and 3^{rd}), for on-going massive discovery. This probability-based operation may be applied for the first-hop devices as well, configured and controlled by the network, if it is seen necessary.
3. For subsequent sending devices, transmission power of determined RS on an extended hop may be set and adjust based upon estimates resulted from the previous listening phase (total received signal strength on certain RS) with some pre-configured offsets and rules in order to enhance precision of the massive discovery. This of course undertakes the simple option of having equal or common transmitter power configured by the serving network (eNB).

Regarding a D2D cluster, in ad-hoc D2D for a public safety or military application, a D2D cluster head may act as an initiator of massive discovery and perform related functions of the network side, as proposed above.

Thus an exemplary embodiment enables offering a flexible and efficient solution for a quick D2D based massive discovery of interest.

Exemplary embodiments of the present invention will now be de-scribed more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

The present invention is applicable to any user terminal, server, corresponding component, and/or to any communication system or any combination of different communication systems that support D2D communication. The communication system may be a fixed communication system or a wireless communication system or a communication system utilizing both fixed networks and wireless networks. The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on LTE-A network elements, without restricting the embodiment to such an architecture, however. The embodiments described in these examples are not limited to the LTE radio systems but can also be implemented in other radio systems, such as UMTS (universal mobile telecommunications system), GSM, EDGE, WCDMA, bluetooth network, WLAN or other fixed, mobile or wireless network. In an embodiment, the presented solution may be applied between elements belonging to different but compatible systems such as LTE and UMTS.

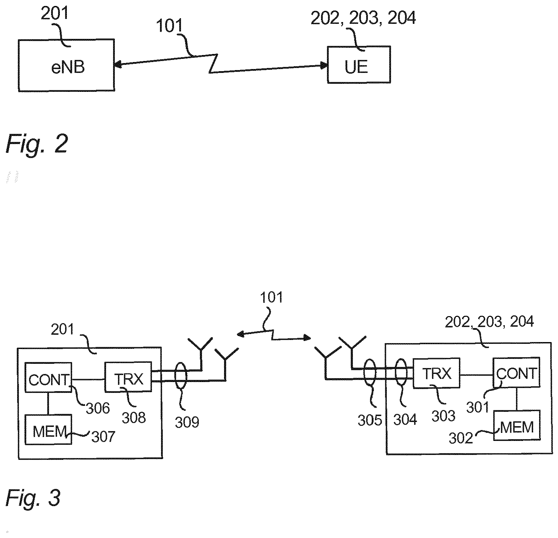

A general architecture of a communication system is illustrated in Figure 2. Figure 2 is a simplified system architecture only showing some elements and functional entities, all being logical units whose implementation may differ from what is shown. The connections shown in Figure 2 are logical connections; the actual physical connections may be different. It is apparent to a person skilled in the art that the systems also comprise other functions and structures. It should be appreciated that the functions, structures, elements and the protocols used in or for D2D communication, are irrelevant to the actual invention. Therefore, they need not to be discussed in more detail here.

The exemplary radio system of Figure 2 comprises a network node 201 of a network operator. The network node 201 may include e.g. an LTE or LTE-A base station of a macro cell (eNB), radio network controller (RNC), or any other network element, or a combination of network elements. The network node 201 may be connected to one or more core network (CN) elements (not shown in Figure 2) such as a mobile switching centre (MSC), MSC server (MSS), mobility management entity (MME), gateway GPRS support node (GGSN), serving GPRS support node (SGSN), home location register (HLR), home subscriber server (HSS), visitor location register (VLR). In Figure 2, the radio network node 201 that may also be called eNB (enhanced node-B, evolved node-B) or network apparatus of the radio system, hosts the functions for radio resource management in a public land mobile network.

Figure 2 shows one or more user equipment 202, 203, 204 located in the service area of the radio network node 201. The user equipment refers to a portable computing device, and it may also be referred to as a user terminal. Such computing devices include wireless mobile communication devices operating with or without a subscriber identification module (SIM) in hardware or in software, including, but not limited to, the following types of devices: mobile phone, smart-phone, personal digital assistant (PDA), handset, laptop computer. In the example situation of Figure 2, the user equipment 202, 203, 204 is capable of connecting to the radio network node 201 via a connection 101 respectively. The user equipment 202, 203, 204 may also be capable of connecting to each other via a respective device-to-device connection (not shown in Figure 2).

Figure 3 is a block diagram of an apparatus according to an embodiment of the invention. Figure 3 shows a user equipment 202, 203, 204 located in the area of a radio network node 201. The user equipment 202, 203, 204 is configured to be in connection with the radio network node 201. The user equipment or UE1 202, UE2 203, UE3 204 comprises a controller 301 operationally connected to a memory 302 and a transceiver 303, respectively. The controller 301 controls the operation of the user equipment 202, 203, 204. The memory 302 is configured to store software and data. The transceiver 303 is configured to set up and maintain a wireless connection 101 to the radio network node 201, respectively. The transceiver 303, 308 is operationally connected to a set of antenna ports 304 connected to an antenna arrangement 305. The antenna arrangement 305 may comprise a set of antennas. The number of antennas may be one to four, for example. The number of antennas is not limited to any particular number. The user equipment 202, 203, 204 may also comprise various other components, such as a user interface, camera, and media player. They are not displayed in the figure due to simplicity.

The radio network node 201, such as an LTE (or LTE-A) base station (eNode-B, eNB) comprises a controller 306 operationally connected to a memory 307, and a transceiver 308. The controller 306 controls the operation of the radio network node 201. The memory 307 is configured to store software and data. The transceiver 308 is configured to set up and maintain a wireless connection to the user equipment 202, 203, 204 within the service area of the radio network node 201. The transceiver 308 is operationally connected to an antenna arrangement 309. The antenna arrangement 314 may comprise a set of antennas. The number of antennas may be two to four, for example. The number of antennas is not limited to any particular number. The radio network node 201 may be operationally connected (directly or indirectly) to another network element of the communication system, such as a further radio network node, radio network controller (RNC), a mobility management entity (MME), an MSC server (MSS), a mobile switching centre (MSC), a radio resource management (RRM) node, a gateway GPRS support node, an operations, administrations and maintenance (OAM) node, a home location register (HLR), a visitor location register (VLR), a serving GPRS support node, a gateway, and/or a server, via an interface (not shown in Figure 3). The embodiments are not, however, restricted to the network given above as an example, but a person skilled in the art may apply the solution to other communication networks provided with the necessary properties. For example, the connections between different network elements may be realized with internet protocol (IP) connections.

Although the apparatus 201, 202, 203, 204 has been depicted as one entity, different modules and memory may be implemented in one or more physical or logical entities. The apparatus may also be a user terminal which is a piece of equipment or a device that associates, or is arranged to associate, the user terminal and its user with a subscription and allows a user to interact with a communications system. The user terminal presents information to the user and allows the user to input information. In other words, the user terminal may be any terminal capable of receiving information from and/or transmitting information to the network, connectable to the network wirelessly or via a fixed connection. Examples of the user terminals include a personal computer, a game console, a laptop (a notebook), a personal digital assistant, a mobile station (mobile phone), a smart phone, and a line telephone.

The apparatus 201, 202, 203, 204 may generally include a processor, controller, control unit or the like connected to a memory and to various inter-faces of the apparatus. Generally the processor is a central processing unit, but the processor may be an additional operation processor. The processor may comprise a computer processor, application-specific integrated circuit (ASIC), field-programmable gate array (FPGA), and/or other hardware components that have been programmed in such a way to carry out one or more functions of an embodiment.

The memory 302, 307 may include volatile and/or non-volatile memory and typically stores content, data, or the like. For example, the memory 302, 307 may store computer program code such as software applications (for example for the detector unit and/or for the adjuster unit) or operating systems, information, data, content, or the like for a processor to perform steps associated with operation of the apparatus in accordance with embodiments. The memory may be, for example, random access memory (RAM), a hard drive, or other fixed data memory or storage device. Further, the memory, or part of it, may be removable memory detachably connected to the apparatus.

The techniques described herein may be implemented by various means so that an apparatus implementing one or more functions of a corresponding mobile entity described with an embodiment comprises not only prior art means, but also means for implementing the one or more functions of a corresponding apparatus de-scribed with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g. procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

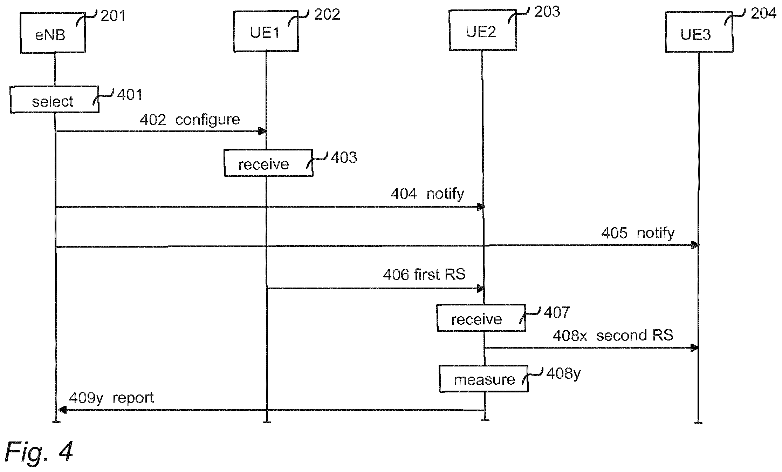

The signalling chart of Figure 4 illustrates the required signalling. In the example of Figure 4, a network apparatus 201 which may include e.g. a LTE-A base station eNB, may on the need basis, periodically or in event-triggered fashion, select and configure, in items 401, 402, one or more first D2D capable devices 202 (among active user devices residing in a specific location of interest under its cell coverage by using dedicated control signalling) for initiating a massive discovery of D2D capable devices around the proximity of at least one of the selected first devices. The at least one of the selected first devices, e.g. a first user terminal UE1 202, may be configured to send a first designated reference signal 406 for a certain period of time, wherein the first user terminal 202 may also be referred to as a first sending device 1S.

One of the other first devices (not shown in Figure 4), in case the apparatus 201 selected more than one first device, may be configured either to send the first designated RS for a certain period of time as the first sending device, or to listen/measure and report massive discovery results to the network apparatus 201 in a certain future time slot or sub-frame, wherein the other first device may be referred to as a first measuring device. The first measuring device should be in D2D range of at least one of the other first sending device(s).

The first sending device 202 may also be configured to stop sending the first RS 406 after the certain time period, and switch to be a first measuring device: to listen/measure and report massive discovery results to the network node 201 in a certain future time slot or sub-frame (not shown in Fig. 4). The rest of the relevant D2D devices in the local area of interest may be referred to as designated subsequent (second 203 or third 204) listening/sending/measuring devices.

The network apparatus 201, upon initiating the aforementioned massive discovery, notifies 404, 405 user terminals 203, 204, e.g. those located in a specific area (by using common control signalling, and, optionally, dedicated control signalling with those user terminals which are in active state) about the initiated massive discovery on-going: its expected life-time of the massive discovery process and any designated portions or subsequent time periods thereof; first and any subsequent reference signals which correspond to possible subsequent flooding multi-hop extensions and time periods; transmit power levels and related offsets for transmitting the first RS and the subsequent RS thereof; triggering conditions for subsequent listening/sending/measuring devices; listening/sending/measuring rules and parameters; and so forth. These configuration parameters, at least in part, may be designated as hard-coded or pre-configured semi-static parameters. The latter may be cell specific or D2D registration area specific parameters. In the D2D registration area specific option, the configuration parameters may be configured and updated for individual user terminals upon initial D2D registration and/or registration update, as an individual user terminal may be moving from one D2D registration area to another (similar to the regular mobile location update). Thus, in the hard-coded or D2D registration area specific options presented above, it may not be needed for the apparatus 201 to indicate each of those configuration parameters while notifying on the on-going massive discovery, e.g. by broadcasting a massive discovery activation notification flag of 1 or few bits and thus reducing common control overhead. In the cell specific option, those configuration parameters may be updated and broadcasted repeatedly in certain system information block (SIB) designated for the D2D capable user terminals.

Subsequent listening/sending/measuring devices 203, 204 (which may be referred to as subsequent xxx devices) are configured such that upon receiving the notification 404, 405 on the on-going massive discovery from the network apparatus 201, a subsequent device (e.g. a second user terminal 203 or third user terminal 204) first listens to receive the pre-configured first RS 406 and any subsequent RS 408x thereof, and then decides for itself whether the subsequent device 203, 204 is relevant to the on-going massive recovery or not. In case the subsequent device does not receive any of the pre-configured RS for the pre-configured listening time period, this device may consider itself as irrelevant to the on-going massive discovery. This device may then deactivate the subsequent xxx device functionality and get back to normal operation. In case the first subsequent device receives 407 the first RS 406 (from at least one selected first device) or subsequent instances 408x of pre-configured RS during the pre-configured listening time period, the subsequent device 203, 204 may consider itself as a direct first-hop subsequent device 203 or an extended-hop (second, third or last hop) subsequent device 204, and switch to send a next corresponding subsequent RS (specific to the first-hop devices or specific to extended-hop devices: same as the received RS or a next RS) for a certain pre-configured time period, or, by default, until end of the massive discovery process according to specified rules and/or parameters, such as transmit power, repeating factor or interval.

The subsequent device 203, 204, upon receiving any instances of pre-configured RS during the pre-configured listening time period, may be self-configured to measure 408y and report 409y for the on-going massive discovery based on the listening results coupled with the pre-configured triggering conditions, listening/sending/measuring rules and parameters. For example, if the subsequent device receives only the second RS 408x and estimates that the received second RS 408x is from some N first-hop devices (based on the total received signal strength on the second RS 408x) then depending on whether further extended hop is configured or not for the on-going massive discovery (as indicated in the aforementioned network notification) and/or whether N is under/above a preconfigured threshold or not, the device may decide whether to send the same second RS 408x or a third RS or measure and report N to the serving network. As another example, a subsequent device, after sending corresponding subsequent RS for a certain time period, may stop sending RS and switch to be a measuring device with a certain preconfigured probability. In this example, the subsequent device may be configured to measure either certain hop's RS or each possible hop's RSs for the on-going massive discovery. This probability-based operation may be applied for the first-hop devices as well, configured and controlled by the network if necessary.

Figure 4 shows an exemplary situation for discovering devices in a communications system. In the exemplary situation of Figure 4, a network apparatus eNB 201 may, in item 401, select one or more first D2D capable devices UE1 202, and configure, in item 402, the selected first device 202 by using dedicated control signalling 402 for initiating a massive discovery of D2D capable devices in the proximity of said devices. The selected first device UE1 202 may receive the dedicated control signalling 402 in item 403. The network apparatus 201 may, upon initiating the massive discovery, notify 404, 405 user terminals 203, 204 about the initiated massive discovery on-going. Based on the received signalling 402, the selected first device UE1 202 may send, in item 406, a first designated reference signal 406 for a certain period of time or until the end of the massive discovery. Then, for example, a first-hop subsequent device UE2 203 may, after receiving the notification 404 on the on-going massive discovery from the network apparatus 201, receive, in item 407, the pre-configured first reference signal 406, and decide that the first-hop subsequent device 203 is relevant to the on-going massive recovery. In item 408x, the first-hop subsequent device 203 may send, to a second-hop subsequent device UE3 204, a corresponding second reference signal for a certain pre-configured time period or until the end of the massive discovery. Then, for example, the first-hop subsequent device, after sending the second RS 408x for a certain time period, may stop sending the second RS 408x and switch to be a measuring device. The first-hop subsequent device 203 may thus measure, in item 408y, a certain hop's RS or each possible hop's RS for the on-going massive discovery. In item 409y, the first-hop subsequent device 203 may report, to the apparatus 201, for the on-going massive discovery based on listening results coupled with pre-configured triggering conditions, listening/sending/measuring rules and parameters.

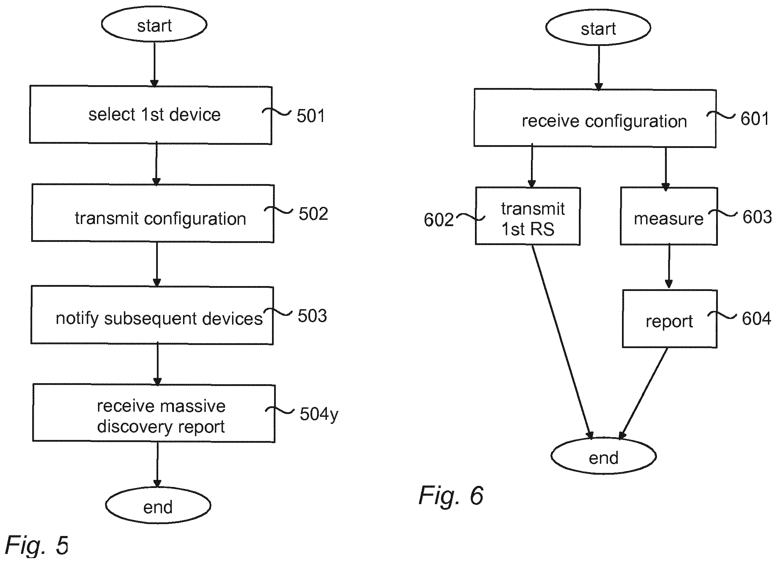

Figure 5 is a flow chart illustrating an exemplary embodiment. The apparatus 201, which may comprise e.g. a network element (network node, e.g. a LTE-capable base station (enhanced node-B, eNB) of a macro cell may, in item 501, select one or more first D2D capable devices UE1 202. In item 502, the apparatus may configure the selected first device 202, by transmitting dedicated control signalling to the selected first device 202, for initiating a massive discovery of D2D capable devices in the proximity of said devices. In item 503, the network apparatus 201 may, upon initiating the massive discovery, notify user terminals 203, 204 about the initiated massive discovery on-going. In item 504y, the apparatus 201 may receive, from a first measuring device, or from a subsequent device 203, 204, a report on the on-going massive discovery, the report being based on listening results coupled with pre-configured triggering conditions, listening/sending/measuring rules and parameters.

Figure 6 is a flow chart illustrating an exemplary embodiment. The apparatus 202, which may comprise e.g. a first user equipment 202 (e.g. a selected first D2D capable device) located in the service area of a radio network node 201, may receive, from the apparatus 201, dedicated control signalling for configuring the selected first device 202 in item 601. Based on the received signalling, the selected first device UE1 202 may send, in item 602, a first designated reference signal to a subsequent device, for a certain period of time or until the end of the massive discovery. Alternatively, the selected first device UE1 202 may measure, in item 602 in response to the received signalling, massive discovery results based on received reference signals, and report, in item 604, the measured massive discovery results to the network apparatus 201.

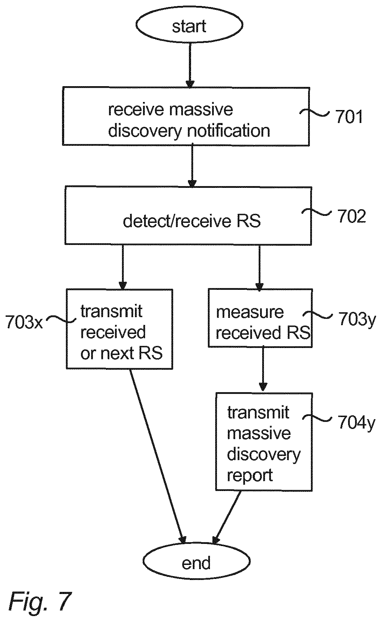

Figure 7 is a flow chart illustrating an exemplary embodiment. The apparatus 203, which may comprise e.g. a second user equipment 203 (e.g. a first-hop subsequent D2D capable device, second-hop subsequent D2D capable device, third-hop subsequent D2D capable device, etc.) located in the service area of a radio network node 201, may, in item 701, receive a massive discovery notification from the apparatus 201. The massive discovery related configuration parameters may be provided to UE here together with the notification, or provided by the network previously e.g. during an initial D2D registration or D2D registration update, or hard-coded configuration parameters may be, at least in part, designated as hard-coded or pre-configured semi-static parameters. In item 702, the first subsequent device 203 may receive, from a sending device UE1 202, a designated reference signal. Thus, in item 702, the subsequent device 203 may detect and receive a certain or each possible preconfigured RS (for example, RS1, RS2, RS3). The subsequent device UE2 203 may, after receiving the pre-configured reference signal, decide whether the subsequent device 203 is relevant to the on-going massive recovery. In item 703x, the subsequent device 203 may send, to a further-hop subsequent device UE3 204, the received RS or a corresponding next reference signal RS 408x (e.g. RS2, RS3) for a certain pre-configured time period or until the end of the massive discovery. Alternatively (or after sending the next RS 408x (e.g. RS2, RS3) for a certain time period) the subsequent device UE2 203 may switch to be a measuring device with a pre-configured probability, wherein the subsequent device 203 may measure, in item 703y, a certain or each possible RS (for example, RS1, RS2, RS3) for the on-going massive discovery. After the measuring step 703y, the subsequent device 203 may report, in item 704y to the apparatus 201, for the on-going massive discovery based on listening results coupled with pre-configured triggering conditions, listening/sending/measuring rules and parameters. In item 703x, the subsequent device UE2 203 may also transmit the received reference signal instead of the next reference signal.

Correspondingly, the second-hop (i.e. UE2 204) or further hop subsequent device may receive the transmitted first or further reference signal, decide whether the device in question is relevant to the massive discovery, and based on that transmit the received or a (yet) further reference signal, and/or switch to be a measuring device and report the massive discovery to the network apparatus 201 (possibly via a first measuring device 1M).

Thus according to an exemplary embodiment, there is provided a method for discovering devices in a communications system, the method comprising selecting, in a first apparatus, one or more user terminals to be a first D2D capable device; transmitting configuration signalling from the first apparatus to the selected first device to initiate a massive discovery of D2D capable devices in the proximity of the devices; transmit, from the first apparatus to user terminals located in a specific area, a notification on the initiated massive discovery of the D2D capable devices; receive, in the first apparatus from a measuring device, a massive discovery report, the report being based on predefined parameters and measurements carried out in the measuring device.

According to another exemplary embodiment, there is provided a method for discovering devices in a communications system, the method comprising receiving configuration signalling in a second apparatus from a network apparatus, the signalling indicating that the second apparatus is selected by the network apparatus to be a first D2D capable device to initiate a massive discovery of D2D capable devices in the proximity of the devices, wherein the method comprises transmitting, in response to the received signalling, a first designated reference signal from the second apparatus to one or more subsequent devices; and/or measuring, in the second apparatus in response to the received signalling, massive discovery results and reporting the measured massive discovery results to the network apparatus, the report being based on predefined parameters and measurements carried out in the second apparatus.

According to yet another exemplary embodiment, there is provided a method for discovering devices in a communications system, the method comprising receiving, in a third apparatus from a network apparatus, a notification on an initiated massive discovery of D2D capable devices, the notification being transmitted by the network apparatus to user terminals located in a specific area; receiving, in the third apparatus from a sending device, a first reference signal related to the massive discovery; wherein the method comprises in response to the received first reference signal, transmitting, from the third apparatus to a next-hop subsequent device, the first reference signal or a second reference signal being related to the massive discovery; and/or measuring in the third apparatus massive discovery results, and reporting the measured massive discovery results to the network apparatus, the report being based on predefined parameters and measurements carried out in the third apparatus.

According to yet another exemplary embodiment, there is provided a method for discovering devices in a communications system, the method comprising receiving, in a fourth apparatus from a network apparatus, a notification on an initiated massive discovery of D2D capable devices, the notification being transmitted by the network apparatus to user terminals located in a specific area; receiving, in the fourth apparatus from a first-hop or further-hop subsequent device, a first or further reference signal related to the massive discovery; wherein the method comprises in response to the received reference signal, transmitting from the fourth apparatus to a next-hop subsequent device, the received reference signal or a further reference signal related to the massive discovery; and/or measuring in the fourth apparatus massive discovery results, and reporting the measured massive discovery results to the network apparatus, the report being based on predefined parameters and measurements carried out in the fourth apparatus.

According to yet another exemplary embodiment, there is provided a first apparatus comprising at least one processor; and at least one memory including a computer program code, wherein the at least one memory and the computer program code are configured to, with the at least one processor, cause the first apparatus to select one or more user terminals to be a first D2D capable device; transmit configuration signalling to the selected first device to initiate a massive discovery of D2D capable devices in the proximity of the devices; transmit, to user terminals located in a specific area, a notification on the initiated massive discovery of the D2D capable devices; receive, from a measuring device, a massive discovery report, the report being based on predefined parameters and measurements carried out in the measuring device.

According to yet another exemplary embodiment, the at least one memory and the computer program code are configured to, with the at least one processor, cause the first apparatus to transmit said notification by broadcasting a massive discovery activation flag of one or more bits.

According to yet another exemplary embodiment, the at least one memory and the computer program code are configured to, with the at least one processor, cause the first apparatus to transmit said notification by using a specific system information block SIB.

According to yet another exemplary embodiment, there is provided a second apparatus comprising at least one processor; and at least one memory including a computer program code, wherein the at least one memory and the computer program code are configured to, with the at least one processor, cause the second apparatus to receive configuration signalling from a network apparatus, the signalling indicating that the second apparatus is selected by the network apparatus to be a first D2D capable device to initiate a massive discovery of D2D capable devices in the proximity of the devices, wherein the at least one memory and the computer program code are configured to, with the at least one processor, cause the second apparatus to transmit, in response to the received signalling, a first designated reference signal to one or more subsequent devices; and/or measure, in response to the received signalling, massive discovery results, wherein the at least one memory and the computer program code are configured to, with the at least one processor, cause the second apparatus to report the measured massive discovery results to the network apparatus, the report being based on predefined parameters and measurements carried out in the second apparatus.

According to yet another exemplary embodiment, the at least one memory and the computer program code are configured to, with the at least one processor, cause the second apparatus to transmit the first designated reference signal to the first-hop subsequent device for a certain period of time or until the end of the massive discovery.

According to yet another exemplary embodiment, the at least one memory and the computer program code are configured to, with the at least one processor, cause the second apparatus to report the measured massive discovery results to the network apparatus.

According to yet another exemplary embodiment, the at least one memory and the computer program code are configured to, with the at least one processor, cause the second apparatus to report the measured massive discovery results to the network apparatus via a first measuring device.

According to yet another exemplary embodiment, there is provided a third apparatus comprising at least one processor; and at least one memory including a computer program code, wherein the at least one memory and the computer program code are configured to, with the at least one processor, cause the third apparatus to receive, from a network apparatus, a notification on an initiated massive discovery of D2D capable devices, the notification being transmitted by the network apparatus to user terminals located in a specific area; receive, from a sending device, a first reference signal related to the massive discovery; wherein the at least one memory and the computer program code are configured to, with the at least one processor, cause the third apparatus to in response to the received first reference signal, transmit, to a second-hop subsequent device, the first reference signal or a second reference signal related to the massive discovery; and/or measure massive discovery results, wherein the at least one memory and the computer program code are configured to, with the at least one processor, cause the third apparatus to report the measured massive discovery results to the network apparatus, the report being based on predefined parameters and measurements carried out in the third apparatus.

According to yet another exemplary embodiment, the at least one memory and the computer program code are configured to, with the at least one processor, cause the third apparatus to report the measured massive discovery results to the network apparatus via a first measuring device.

According to yet another exemplary embodiment, the at least one memory and the computer program code are configured to, with the at least one processor, cause the third apparatus to deactivate its subsequent device functionality if it does not receive any reference signal related to the massive discovery within predefined time period.

According to yet another exemplary embodiment, the at least one memory and the computer program code are configured to, with the at least one processor, cause the third apparatus to transmit, to the second-hop subsequent device, the first reference signal or the second reference signal related to the massive discovery for a predefined time period or until the end of the on-going massive discovery process.

According to yet another exemplary embodiment, there is provided a fourth apparatus comprising at least one processor; and at least one memory including a computer program code, wherein the at least one memory and the computer program code are configured to, with the at least one processor, cause the fourth apparatus to receive, from a network apparatus, a notification on an initiated massive discovery of D2D capable devices, the notification being transmitted by the network apparatus to user terminals located in a specific area; receive, from a first-hop or further-hop subsequent device, a first or further reference signal related to the massive discovery; wherein the at least one memory and the computer program code are configured to, with the at least one processor, cause the fourth apparatus to in response to the received reference signal, transmit to a next-hop subsequent device, the received reference signal or a further reference signal related to the massive discovery; and/or measure massive discovery results, wherein the at least one memory and the computer program code are configured to, with the at least one processor, cause the fourth apparatus to report the measured massive discovery results to the network apparatus, the report being based on predefined parameters and measurements carried out in the fourth apparatus.

According to yet another exemplary embodiment, the at least one memory and the computer program code are configured to, with the at least one processor, cause the fourth apparatus to report the measured massive discovery results to the network apparatus via a first measuring device.

According to yet another exemplary embodiment, the at least one memory and the computer program code are configured to, with the at least one processor, cause the fourth apparatus to transmit, to the another subsequent device, the received reference signal or the further reference signal related to the massive discovery for a predefined time period or until the end of the on-going massive discovery process.

According to yet another exemplary embodiment, there is provided a computer program product comprising program code means configured to perform any of the method steps when the program is run on a computer.

According to yet another exemplary embodiment, there is provided a computer-readable storage medium comprising program code means configured to perform any of the method steps when executed on a computer.

According to yet another exemplary embodiment, said parameters include pre-configured semi-static configuration parameters, such as cell specific or D2D registration area specific parameters, configured and updated to individual user terminals upon an initial D2D registration and/or upon a registration update, or hard-coded configuration parameters.

The steps/points, signalling messages and related functions de-scribed above in Figures 1 to 7 are in no absolute chronological order, and some of the steps/points may be performed simultaneously or in an order differing from the given one. Other functions can also be executed between the steps/points or within the steps/points and other signalling messages sent be-tween the illustrated messages. Some of the steps/points or part of the steps/points can also be left out or replaced by a corresponding step/point or part of the step/point. The apparatus operations illustrate a procedure that may be implemented in one or more physical or logical entities. The signalling messages are only exemplary and may even comprise several separate messages for transmitting the same information. In addition, the messages may also contain other information.

It will be obvious to a person skilled in the art that, as the technology advances, the inventive concept can be implemented in various ways. The invention and its embodiments are not limited to the examples described above but may vary within the scope of the claims.

### List of abbreviations

- D2D: device-to-device
- ProSe: proximity services
- SON: self-organized network
- RS: reference signal
- UE: user equipment
- LTE: long term evolution
- LTE-A: long term evolution - advanced
- UMTS: universal mobile telecommunications system
- GSM: global system for mobile communications
- EDGE: enhanced data rates for global evolution
- WCDMA: wideband code division multiple access
- WLAN: wireless local area network
- 3GPP: 3^{rd} generation partnership project

## Claims

1. A method for discovering devices in a communications system, **characterized by**
selecting (401, 501), in a first apparatus, one or more user terminals to be a first D2D capable device (202);
transmitting (402, 502) configuration signalling from the first apparatus (201) to the selected first device (202) to initiate a massive discovery of D2D capable devices in the proximity of the devices;
transmit (404, 405, 503), from the first apparatus (201) to user terminals (203, 204) located in a specific area, a notification on the initiated massive discovery of the D2D capable devices;
receive (504y), in the first apparatus (201) from a measuring device (1M, 203, 204), a massive discovery report, the report being based on predefined parameters and measurements carried out in the measuring device (1M, 203, 204).

2. A method for discovering devices in a communications system, **char**- **acterized** by
receiving (403, 601) configuration signalling in a second apparatus (202) from a network apparatus (201), the signalling indicating that the second apparatus (202) is selected by the network apparatus (201) to be a first D2D capable device (202) to initiate a massive discovery of D2D capable devices in the proximity of the devices,
wherein the method comprises
transmitting (406, 602), in response to the received signalling, a first designated reference signal from the second apparatus (202) to one or more subsequent devices (203); and/or
measuring (603), in the second apparatus (202) in response to the received signalling, massive discovery results and reporting the measured massive discovery results to the network apparatus (201), the report being based on predefined parameters and measurements carried out in the second apparatus (202).

3. A method for discovering devices in a communications system, **char**- **acterized** by
receiving, in a fourth apparatus (204) from a network apparatus (201), a notification on an initiated massive discovery of D2D capable devices, the notification being transmitted by the network apparatus (201) to user terminals (203, 204) located in a specific area;
receiving, in the fourth apparatus (204) from a sending device (202, 203), a first or further reference signal related to the massive discovery;
wherein the method comprises
in response to the received reference signal, transmitting from the fourth apparatus (204) to a next-hop subsequent device, the received reference signal or a further reference signal related to the massive discovery; and/or
measuring in the fourth apparatus (204) massive discovery results, and reporting the measured massive discovery results to the network apparatus (201), the report being based on predefined parameters and measurements carried out in the fourth apparatus (204).

4. A first apparatus (201) comprising at least one processor; and at least one memory including a computer program code, **characterized in that** the at least one memory and the computer program code are configured to, with the at least one processor, cause the first apparatus to
select one or more user terminals to be a first D2D capable device (202);
transmit configuration signalling to the selected first device (202) to initiate a massive discovery of D2D capable devices in the proximity of the devices;
transmit, to user terminals (203, 204) located in a specific area, a notification on the initiated massive discovery of the D2D capable devices;
receive, from a measuring device (1M, 203, 204), a massive discovery report, the report being based on predefined parameters and measurements carried out in the measuring device (1M, 203, 204).

5. A first apparatus (201) as claimed in claim 4, **characterized in that** the at least one memory and the computer program code are configured to, with the at least one processor, cause the first apparatus (201) to transmit said notification by at least one of
broadcasting a massive discovery activation flag of one or more bits, and
using a specific system information block SIB.

6. A second apparatus (202) comprising at least one processor; and at least one memory including a computer program code, **characterized in that** the at least one memory and the computer program code are configured to, with the at least one processor, cause the second apparatus to
receive configuration signalling from a network apparatus (201), the signalling indicating that the second apparatus (202) is selected by the network apparatus (201) to be a first D2D capable device (202) to initiate a massive discovery of D2D capable devices in the proximity of the devices,
wherein the at least one memory and the computer program code are configured to, with the at least one processor, cause the second apparatus (202) to
transmit, in response to the received signalling, a first designated reference signal to one or more subsequent devices (203); and/or
measure, in response to the received signalling, massive discovery results, wherein the at least one memory and the computer program code are configured to, with the at least one processor, cause the second apparatus (202) to report the measured massive discovery results to the network apparatus (201), the report being based on predefined parameters and measurements carried out in the second apparatus (202).

7. A second apparatus (202) as claimed in claim 6, **characterized in that** the at least one memory and the computer program code are configured to, with the at least one processor, cause the second apparatus to transmit the first designated reference signal to a first-hop subsequent device (203) for a certain period of time or until the end of the massive discovery.

8. A second apparatus (202) as claimed in claim 6 or 7, **characterized in that** the at least one memory and the computer program code are configured to, with the at least one processor, cause the second apparatus to report the measured massive discovery results to the network apparatus (201) via a first measuring device (1M).

9. A fourth apparatus (204) comprising at least one processor; and at least one memory including a computer program code, **characterized in that** the at least one memory and the computer program code are configured to, with the at least one processor, cause the fourth apparatus to
receive, from a network apparatus (201), a notification on an initiated massive discovery of D2D capable devices, the notification being transmitted by the network apparatus (201) to user terminals (203, 204) located in a specific area;
receive, from a sending device (202, 203), a first or further reference signal related to the massive discovery;
wherein the at least one memory and the computer program code are configured to, with the at least one processor, cause the fourth apparatus to
in response to the received reference signal, transmit to a next-hop subsequent device, the received reference signal or a further reference signal related to the massive discovery; and/or
measure massive discovery results, wherein the at least one memory and the computer program code are configured to, with the at least one processor, cause the fourth apparatus (204) to report the measured massive discovery results to the network apparatus (201), the report being based on predefined parameters and measurements carried out in the fourth apparatus (204).

10. A fourth apparatus (204) as claimed in claim 9, **characterized in that** the at least one memory and the computer program code are configured to, with the at least one processor, cause the fourth apparatus (204) to
report the measured massive discovery results to the network apparatus (201) via a first measuring device (1M); and/or
transmit, to the another subsequent device, the received reference signal or the further reference signal related to the massive discovery for a predefined time period or until the end of the on-going massive discovery process.

11. A fourth apparatus (203) as claimed in claim 9, **characterized in that** the at least one memory and the computer program code are configured to, with the at least one processor, cause the fourth apparatus to
report the measured massive discovery results to the network apparatus (201) via a first measuring device (1M);
deactivate its subsequent device functionality if it does not receive any reference signal related to the massive discovery within predefined time period; and/or
transmit, to the next-hop subsequent device (204), the received reference signal or the further reference signal related to the massive discovery for a predefined time period or until the end of the on-going massive discovery process.

12. A computer program product, **characterized by** comprising program code means configured to perform any of method steps of claims 1 to 3 when the program is run on a computer.

13. An apparatus as claimed in any of claims 4 to 11, **characterized in that** said parameters include
pre-configured semi-static configuration parameters, such as cell specific or D2D registration area specific parameters, configured and updated to individual user terminals upon an initial D2D registration and/or upon a registration update, or
hard-coded configuration parameters.

## Patentansprüche

1. Verfahren zum Entdecken von Geräten in einem Kommunikationssystem, **gekennzeichnet durch** Auswählen (401, 501), in einer ersten Vorrichtung, von einem oder mehr Benutzerendgeräten als ein erstes D2D-fähiges Gerät (202);
Übertragen (402, 502) von Konfigurationssignalisierung von der ersten Vorrichtung (201) an das ausgewählte erste Gerät (202) zum Einleiten einer massiven Entdeckung von D2D-fähigen Geräten in der Nähe der Geräte; Übertragen (404, 405, 503), von der ersten Vorrichtung (201) an Benutzerendgeräte (203, 204), die sich in einem spezifischen Bereich befinden, einer Mitteilung über die eingeleitete massive Entdeckung der D2D-fähigen Geräte;
Empfangen (504y), in der ersten Vorrichtung (201) von einem Messgerät (1M, 203, 204), eines massiven Entdeckungsberichts, wobei der Bericht auf vordefinierten Parametern und Messungen, die im Messgerät (1M, 203, 204) ausgeführt werden, basiert.

2. Verfahren zum Entdecken von Geräten in einem Kommunikationssystem, **gekennzeichnet durch** Empfangen (403, 601) von Konfigurationssignalisierung in einer zweiten Vorrichtung (202) von einer Netzwerkvorrichtung (201), wobei die Signalisierung anzeigt, dass die zweite Vorrichtung (202) **durch** die Netzwerkvorrichtung (201) als ein erstes D2D-fähiges Gerät (202) zum Einleiten einer massiven Entdeckung von D2D-fähigen Geräten in der Nähe der Geräte ausgewählt ist,
wobei das Verfahren aufweist:
Übertragen (406, 602), in Reaktion auf die empfangene Signalisierung, eines ersten designierten Referenzsignals von der zweiten Vorrichtung (202) an ein oder mehr nachfolgende Geräte (203); und/oder
Messen (603), in der zweiten Vorrichtung (202) in Reaktion auf die empfangene Signalisierung, von massiven Entdeckungsergebnissen und Melden der gemessenen massiven Entdeckungsergebnisse an die Netzwerkvorrichtung (201), wobei der Bericht auf vordefinierten Parametern und Messungen, die in der zweiten Vorrichtung (202) ausgeführt werden, basiert.

3. Verfahren zum Entdecken von Geräten in einem Kommunikationssystem, **gekennzeichnet durch** Empfangen, in einer vierten Vorrichtung (204) von einer Netzwerkvorrichtung (201), einer Mitteilung über eine eingeleitete massive Entdeckung von D2D-fähigen Geräten, wobei die Mitteilung **durch** die Netzwerkvorrichtung (201) an Benutzerendgeräte (203, 204) übertragen wird, welche sich in einem spezifischen Bereich befinden;
Empfangen, in der vierten Vorrichtung (204) von einem Sendegerät (202, 203), eines ersten oder weiteren Referenzsignals, das die massive Entdeckung betrifft;
wobei das Verfahren aufweist:
in Reaktion auf das empfangene Referenzsignal, Übertragen von der vierten Vorrichtung (204) an ein im nächsten Sprung nachfolgendes Gerät, des empfangenen Referenzsignals oder eines weiteren Referenzsignals, das die massive Entdeckung betrifft; und/oder
Messen, in der vierten Vorrichtung (204), von massiven Entdeckungsergebnissen und Melden der gemessenen massiven Entdeckungsergebnisse an die Netzwerkvorrichtung (201), wobei der Bericht auf vordefinierten Parametern und Messungen, die in der vierten Vorrichtung (204) ausgeführt werden, basiert.

4. Erste Vorrichtung (201), aufweisend mindestens einen Prozessor und mindestens einen Speicher, der einen Computerprogrammcode enthält, **dadurch gekennzeichnet, dass** der mindestens eine Speicher und der Computerprogrammcode, mit dem mindestens einen Prozessor, zum Veranlassen der ersten Vorrichtung zu Folgendem konfiguriert sind:
Auswählen von einem oder mehr Benutzerendgeräten als ein erstes D2D-fähiges Gerät (202);
Übertragen von Konfigurationssignalisierung an das ausgewählte erste Gerät (202) zum Einleiten einer massiven Entdeckung von D2D-fähigen Geräten in der Nähe der Geräte;
Übertragen, an Benutzerendgeräte (203, 204), die sich in einem spezifischen Bereich befinden, einer Mitteilung über die eingeleitete massive Entdeckung der D2D-fähigen Geräte;
Empfangen, von einem Messgerät (1M, 203, 204), eines massiven Entdeckungsberichts, wobei der Bericht auf vordefinierten Parametern und Messungen, die im Messgerät (1M, 203, 204) ausgeführt werden, basiert.

5. Erste Vorrichtung (201) nach Anspruch 4, **dadurch gekennzeichnet, dass** der mindestens eine Speicher und der Computerprogrammcode, mit dem mindestens einen Prozessor, zum Veranlassen der ersten Vorrichtung (201) zum Übertragen der Mitteilung durch mindestens eines von
Rundsenden eines massiven Entdeckungsaktivierungs-Flag von einem oder mehr Bits, und
Verwenden eines spezifischen Systeminformationsblocks SIB
konfiguriert sind.

6. Zweite Vorrichtung (202), aufweisend mindestens einen Prozessor und mindestens einen Speicher, der Computerprogrammcode enthält, **dadurch gekennzeichnet, dass** der mindestens eine Speicher und der Computerprogrammcode, mit dem mindestens einen Prozessor, zum Veranlassen der zweiten Vorrichtung zu Folgendem konfiguriert sind:
Empfangen von Konfigurationssignalisierung von einer Netzwerkvorrichtung (201), wobei die Signalisierung anzeigt, dass die zweite Vorrichtung (202) durch die Netzwerkvorrichtung (201) als ein erstes D2D-fähiges Gerät (202) zum Einleiten einer massiven Entdeckung von D2D-fähigen Geräten in der Nähe der Geräte ausgewählt ist,
wobei der mindestens eine Speicher und der Computerprogrammcode, mit dem mindestens einen Prozessor, zum Veranlassen der zweiten Vorrichtung (202) zu Folgendem konfiguriert sind:
Übertragen, in Reaktion auf die empfangene Signalisierung, eines ersten designierten Referenzsignals an ein oder mehr nachfolgende Geräte (203); und/oder
Messen, in Reaktion auf die empfangene Signalisierung, von massiven Entdeckungsergebnissen, wobei der mindestens eine Speicher und der Computerprogrammcode, mit dem mindestens einen Prozessor, zum Veranlassen der zweiten Vorrichtung (202) zum Melden der gemessenen massiven Entdeckungsergebnisse an die Netzwerkvorrichtung (201) konfiguriert sind, wobei der Bericht auf vordefinierten Parametern und Messungen, die in der zweiten Vorrichtung (202) ausgeführt werden, basiert.

7. Zweite Vorrichtung (202) nach Anspruch 6, **dadurch gekennzeichnet, dass** der mindestens eine Speicher und der Computerprogrammcode, mit dem mindestens einen Prozessor, zum Veranlassen der zweiten Vorrichtung zum Übertragen des ersten designierten Referenzsignals an ein im ersten Sprung nachfolgendes Gerät (203) für einen bestimmten Zeitraum oder bis zum Ende der massiven Entdeckung konfiguriert sind.

8. Zweite Vorrichtung (202) nach einem der Ansprüche 6 oder 7, **dadurch gekennzeichnet, dass** der mindestens eine Speicher und der Computerprogrammcode, mit dem mindestens einen Prozessor, zum Veranlassen der zweiten Vorrichtung zum Melden der massiven Entdeckungsergebnisse an die Netzwerkvorrichtung (201) über ein erstes Messgerät (1M) konfiguriert sind.

9. Vierte Vorrichtung (204), aufweisend mindestens einen Prozessor und mindestens einen Speicher, der Computerprogrammcode enthält, **dadurch gekennzeichnet, dass** der mindestens eine Speicher und der Computerprogrammcode, mit dem mindestens einen Prozessor, zum Veranlassen der vierten Vorrichtung zu Folgendem konfiguriert sind:
Empfangen, von einer Netzwerkvorrichtung (201), einer Mitteilung über eine eingeleitete massive Entdeckung von D2D-fähigen Geräten, wobei die Mitteilung durch die Netzwerkvorrichtung (201) an Benutzerendgeräte (203, 204) übertragen wird, welche sich in einem spezifischen Bereich befinden;
Empfangen, von einem Sendegerät (202, 203), eines ersten oder weiteren Referenzsignals, das die massive Entdeckung betrifft;
wobei der mindestens eine Speicher und der Computerprogrammcode, mit dem mindestens einen Prozessor, zum Veranlassen der vierten Vorrichtung zu Folgendem konfiguriert sind:
in Reaktion auf das empfangene Referenzsignal, Übertragen, an ein im nächsten Sprung nachfolgendes Gerät, des empfangenen Referenzsignals oder eines weiteren Referenzsignals, das die massive Entdeckung betrifft; und/oder
Messen von massiven Entdeckungsergebnissen, wobei der mindestens eine Speicher und der Computerprogrammcode, mit dem mindestens einen Prozessor, zum Veranlassen der vierten Vorrichtung (204) zum Melden der gemessenen massiven Entdeckungsergebnisse an die Netzwerkvorrichtung (201) konfiguriert sind, wobei der Bericht auf vordefinierten Parametern und Messungen, die in der vierten Vorrichtung (204) ausgeführt werden, basiert.

10. Vierte Vorrichtung (204) nach Anspruch 9, **dadurch gekennzeichnet, dass** der mindestens eine Speicher und der Computerprogrammcode, mit dem mindestens einen Prozessor, zum Veranlassen der vierten Vorrichtung (204) zu Folgendem konfiguriert sind:
Melden der gemessenen massiven Entdeckungsergebnisse an die Netzwerkvorrichtung (201) über ein erstes Messgerät (1M); und/oder Übertragen, an das weitere nachfolgende Gerät, des empfangenen Referenzsignals oder des weiteren Referenzsignals, das die massive Entdeckung betrifft, für einen vordefinierten Zeitraum oder bis zum Ende des laufenden massiven Entdeckungsprozesses.

11. Vierte Vorrichtung (203) nach Anspruch 9, **dadurch gekennzeichnet, dass** der mindestens eine Speicher und der Computerprogrammcode, mit dem mindestens einen Prozessor, zum Veranlassen der vierten Vorrichtung zu Folgendem konfiguriert sind:
Melden der gemessenen massiven Entdeckungsergebnisse an die Netzwerkvorrichtung (201) über ein erstes Messgerät (1M);
Deaktivieren ihrer nachfolgenden Gerätefunktionalität, wenn sie kein Referenzsignal, das die massive Entdeckung betrifft, innerhalb eines vordefinierten Zeitraums empfängt; und/oder
Übertragen, an das im nächsten Sprung nachfolgende Gerät (204), des empfangenen Referenzsignals oder des weiteren Referenzsignals, das die massive Entdeckung betrifft, für einen vordefinierten Zeitraum oder bis zum Ende des laufenden massiven Entdeckungsprozesses.

12. Computerprogrammprodukt, **dadurch gekennzeichnet, dass** es Programmcodemittel aufweist, die zum Ausführen von jeglichem der Verfahrensschritte nach Anspruch 1 bis 3 konfiguriert sind, wenn das Programm auf einem Computer ausgeführt wird.

13. Vorrichtung nach einem der Ansprüche 4 bis 11, **dadurch gekennzeichnet, dass** die Parameter beinhalten:
vordefinierte semistatische Konfigurationsparameter, wie etwa zellenspezifische oder für den D2D-Registrierungsbereich spezifische Parameter, konfiguriert und aktualisiert für individuelle Benutzerendgeräte nach einer anfänglichen D2D-Registrierung und/oder nach einer Registrierungsaktualisierung, oder festprogrammierte Konfigurationsparameter.

## Revendications

1. Procédé de découverte de dispositifs dans un système de communication, **caractérisé par**
la sélection (401, 501), dans un premier appareil, d'un ou plusieurs terminaux utilisateurs en tant que premier dispositif à capacité D2D (202) ;
la transmission (402, 502) d'une signalisation de configuration, par le premier appareil (201), au premier dispositif (202) sélectionné, pour initier une découverte massive de dispositifs à capacité D2D à proximité des dispositifs ;
la transmission (404, 405, 503), par le premier appareil (201), à des terminaux utilisateurs (203, 204) situés dans une zone spécifique, d'une notification concernant la découverte massive des dispositifs à capacité D2D qui a été initiée ;
la réception (504y), dans le premier appareil (201), en provenance d'un dispositif de mesure (1M, 203, 204), d'un rapport de découverte massive, le rapport étant basé sur des paramètres prédéfinis et des mesures effectuées dans le dispositif de mesure (1M, 203, 204).

2. Procédé de découverte de dispositifs dans un système de communication, **caractérisé par**
la réception (403, 601) d'une signalisation de configuration, dans un deuxième appareil (202), en provenance d'un appareil de réseau (201), la signalisation indiquant que le deuxième appareil (202) est sélectionné par l'appareil de réseau (201) en tant que premier dispositif à capacité D2D (202) pour initier une découverte massive de dispositifs à capacité D2D à proximité des dispositifs,
le procédé comprenant
en réponse à la signalisation reçue, la transmission (406, 602), par le deuxième appareil (202), à un ou plusieurs dispositifs suivants (203), d'un premier signal de référence désigné ; et/ou
en réponse à la signalisation reçue, la mesure (603), dans le deuxième appareil (202), de résultats de découverte massive, et le rapport des résultats de découverte massive mesurés à l'appareil de réseau (201), le rapport étant basé sur des paramètres prédéfinis et des mesures effectuées dans le deuxième appareil (202).

3. Procédé de découverte de dispositifs dans un système de communication, **caractérisé par**
la réception, dans un quatrième appareil (204), en provenance d'un appareil de réseau (201), d'une notification concernant une découverte massive de dispositifs à capacité D2D qui a été initiée, la notification étant transmise par l'appareil de réseau (201) à des terminaux utilisateurs (203, 204) situés dans une zone spécifique ;
la réception, dans le quatrième appareil (204), en provenance d'un dispositif émetteur (202, 203), d'un premier ou d'un autre signal de référence associé à la découverte massive ;
le procédé comprenant
en réponse au signal de référence reçu, la transmission, par le quatrième appareil (204), à un dispositif suivant au prochain saut, du signal de référence reçu ou d'un autre signal de référence associé à la découverte massive ; et/ou
la mesure, dans le quatrième appareil (204), de résultats de découverte massive, et le rapport des résultats de découverte massive mesurés à l'appareil de réseau (201), le rapport étant basé sur des paramètres prédéfinis et des mesures effectuées dans le quatrième appareil (204) .

4. Premier appareil (201) comprenant au moins un processeur ; et au moins une mémoire incluant un code de programme informatique, **caractérisé en ce que** l'au moins une mémoire et le code de programme informatique sont configurés pour, avec l'au moins un processeur, faire en sorte que le premier appareil
sélectionne un ou plusieurs terminaux utilisateurs en tant que premier dispositif à capacité D2D (202) ;
transmette une signalisation de configuration au premier dispositif (202) sélectionné, pour initier une découverte massive de dispositifs à capacité D2D à proximité des dispositifs ;
transmette, à des terminaux utilisateurs (203, 204) situés dans une zone spécifique, une notification sur la découverte massive de dispositifs à capacité D2D qui a été initiée ;
reçoive, en provenance d'un dispositif de mesure (1M, 203, 204), un rapport de découverte massive, le rapport étant basé sur des paramètres prédéfinis et des mesures effectuées dans le dispositif de mesure (1M, 203, 204).

5. Premier appareil (201) selon la revendication 4, **caractérisé en ce que** l'au moins une mémoire et le code de programme informatique sont configurés pour, avec l'au moins un processeur, faire en sorte que le premier appareil (201) transmette ladite notification par au moins l'une de
la radiodiffusion d'un drapeau d'activation de découverte massive d'un ou plusieurs bits, et
l'utilisation d'un bloc d'information système SIB spécifique.

6. Deuxième appareil (202) comprenant au moins un processeur ; et au moins une mémoire incluant un code de programme informatique, **caractérisé en ce que** l'au moins une mémoire et le code de programme informatique sont configurés pour, avec l'au moins un processeur, faire en sorte que le deuxième appareil
reçoive une signalisation de configuration en provenance d'un appareil de réseau (201), la signalisation indiquant que le deuxième appareil (202) est sélectionné par l'appareil de réseau (201) en tant que premier dispositif à capacité D2D (202) pour initier une découverte massive de dispositifs à capacité D2D à proximité des dispositifs,
l'au moins une mémoire et le code de programme informatique étant configurés pour, avec l'au moins un processeur, faire en sorte que le deuxième appareil (202)
en réponse à la signalisation reçue, transmette un premier signal de référence désigné à un ou plusieurs dispositifs suivants (203) ; et/ou
en réponse à la signalisation reçue, mesure des résultats de découverte massive, l'au moins une mémoire et le code de programme informatique étant configurés pour, avec l'au moins un processeur, faire en sorte que le deuxième appareil (202) rapporte les résultats de découverte massive mesurés à l'appareil de réseau (201), le rapport étant basé sur des paramètres prédéfinis et des mesures effectuées dans le deuxième appareil (202).

7. Deuxième appareil (202) selon la revendication 6, **caractérisé en ce que** l'au moins une mémoire et le code de programme informatique sont configurés pour, avec l'au moins un processeur, faire en sorte que le deuxième appareil transmette le premier signal de référence désigné à un dispositif suivant au prochain saut (203) sur une certaine période de temps ou jusqu'à la fin de la découverte massive.

8. Deuxième appareil (202) selon la revendication 6 ou 7, **caractérisé en ce que** l'au moins une mémoire et le code de programme informatique sont configurés pour, avec l'au moins un processeur, faire en sorte que le deuxième appareil rapporte les résultats de découverte massive mesurés à l'appareil de réseau (201) via un premier dispositif de mesure (1M).

9. Quatrième appareil (204) comprenant au moins un processeur ; et au moins une mémoire incluant un code de programme informatique, **caractérisé en ce que** l'au moins une mémoire et le code de programme informatique sont configurés pour, avec l'au moins un processeur, faire en sorte que le quatrième appareil
reçoive, en provenance d'un appareil de réseau (201), une notification concernant une découverte massive de dispositifs à capacité D2D qui a été initiée, la notification étant transmise par l'appareil de réseau (201) à des terminaux utilisateurs (203, 204) situés dans une zone spécifique ;
reçoive, en provenance d'un dispositif émetteur (202, 203), un premier ou un autre signal de référence associé à la découverte massive ;
l'au moins une mémoire et le code de programme informatique étant configurés pour, avec l'au moins un processeur, faire en sorte que le quatrième appareil
en réponse au signal de référence reçu, transmette à un dispositif suivant au prochain saut, le signal de référence reçu ou un autre signal de référence associé à la découverte massive ; et/ou
mesure des résultats de découverte massive, l'au moins une mémoire et le code de programme informatique étant configurés pour, avec l'au moins un processeur, faire en sorte que le quatrième appareil (204) rapporte les résultats de découverte massive mesurés à l'appareil de réseau (201), le rapport étant basé sur des paramètres prédéfinis et des mesures effectuées dans le quatrième appareil (204).

10. Quatrième appareil (204) selon la revendication 9, **caractérisé en ce que** l'au moins une mémoire et le code de programme informatique sont configurés pour, avec l'au moins un processeur, faire en sorte que le quatrième appareil (204)
rapporte les résultats de découverte massive mesurés à l'appareil de réseau (201) via un premier dispositif de mesure (1M) ; et/ou
transmette, à l'autre dispositif suivant, le signal de référence reçu ou l'autre signal de référence associé à la découverte massive sur une période de temps prédéfinie ou jusqu'à la fin du processus de découverte massive en cours.

11. Quatrième appareil (203) selon la revendication 9, **caractérisé en ce que** l'au moins une mémoire et le code de programme informatique sont configurés pour, avec l'au moins un processeur, faire en sorte que le quatrième appareil
rapporte les résultats de découverte massive mesurés à l'appareil de réseau (201) via un premier dispositif de mesure (1M) ;
désactive sa fonctionnalité de dispositif suivant s'il ne reçoit aucun signal de référence associé à la découverte massive sur une période de temps prédéfinie ; et/ou
transmette, au dispositif suivant au prochain saut (204), le signal de référence reçu ou l'autre signal de référence associé à la découverte massive sur une période de temps prédéfinie ou jusqu'à la fin du processus de découverte massive en cours.

12. Produit de programme informatique, **caractérisé en ce qu'**il comprend des moyens de code de programme configurés pour effectuer l'une quelconque des étapes de procédé selon les revendications 1 à 3 lorsque le programme est exécuté sur un ordinateur.

13. Appareil selon l'une quelconque des revendications 4 à 11, **caractérisé en ce que** lesdits paramètres incluent
des paramètres de configuration semi-statiques préconfigurés, tels que des paramètres spécifiques de cellule ou spécifiques de zone d'enregistrement D2D, configurés et mis à jour sur des terminaux utilisateurs individuels lors d'un enregistrement D2D initial et/ou lors d'une mise à jour d'enregistrement, ou
des paramètres de configuration codés en dur.
